# EUROPÄISCHE PATENTANMELDUNG

(11) **EP 4 531 479 A1**
(43) Veröffentlichungstag der Anmeldung: **02.04.2025**
(21) Anmeldenummer: 24202412.3
(22) Anmeldetag: 25.09.2024
(51) Int. Cl.: H04W 72/54, H04W 76/20, H04L 65/80, H04W 64/00, H04W 36/32

(54) **VERBESSERTE PROGNOSE EINER ZIELRATE**

(30) Priorität: 26.09.2023 DE 102023209376
(71) Anmelder: Siemens Mobility GmbH, 81739 München (DE)
(72) Erfinder: Oertel, Norbert, 99867 Gotha (DE); Rölle, Harald, 85640 Putzbrunn/Oedenstockach (DE)
(74) Vertreter: Siemens Patent Attorneys

(57) **Zusammenfassung**

Die Erfindung betrifft ein Verfahren (100) zur Prognose eines Steuerparameters betreffend eine Warteschlangenverwaltung, bei welchem eine zur Verfügung stehende Datenübertragungsrate gemessen wird (102). Des Weiteren wird ein mit der gemessenen (102) Datenübertragungsrate verknüpfter Ort bestimmt (104). Der Steuerparameter wir auf Basis der gemessenen (102) Datenübertragungsrate und des mit dieser gemessenen (102) Datenübertragungsrate verknüpfen Orts ermittelt (106).

## Beschreibung

Die Erfindung betrifft ein Verfahren zur Prognose eines Steuerparameters, ein Fahrzeug zur Durchführung des Verfahrens, ein Computerprogramm sowie ein computerlesbares Medium.

Bei Datenübertragungen mittels Paketvermittlung ist es bekannt, eine Warteschlangenverwaltung vorzusehen. Auf diese Weise können vorbestimmte Anforderungsprofile betreffend diese Datenübertragung zuverlässig erfüllt werden. Anhand der Anforderungsprofile können beispielsweise unterschiedliche Dienstgüten, welche auch mit der Abkürzung "QoS" benannt werden, oder eine Kritikalität betreffend die Datenübertragung berücksichtigt werden. Zu diesem Zweck ist es üblich, Datenpakete in unterschiedliche Prioritätsklassen zu unterteilen. Beispielsweise können so mittels des sogenannten Traffic-Shapings Pakete nach vorbestimmten Kriterien verzögert oder verworfen werden. Dadurch kann entweder eine Datenübertragungsrate begrenzt werden oder im Falle einer begrenzt zur Verfügung stehenden Datenübertragungsrate ein vorbestimmtes Anforderungsprofil erfüllt werden. Insbesondere kann auf diese Weise sichergestellt werden, dass eine Übertragung von sicherheitsrelevanten Daten durchgeführt wird und/oder eine vorbestimmte Dienstgüte eingehalten wird. Um ein solches Traffic-Shaping realisieren zu können, ist jedoch die Kenntnis einer genauen Zielrate erforderlich. Bei der Zielrate handelt es sich um einen Steuerparameter, welcher sich an einer maximal zur Verfügung stehenden Datenübertragungsrate orientiert. Dabei ist die Bestimmung der Zielrate im Falle einer Festnetzanwendung in der Regel problemlos möglich, da eine maximal zur Verfügung stehende Datenübertragungsrate bekannt ist. Dahingegen schwankt die maximal zur Verfügung stehende Datenübertragungsrate regelmäßig im Falle einer mobilen Anwendung. Die genannten Schwankungen in der mobil zur Verfügung stehenden Datenübertragungsrate sind aus Anwendersicht allerdings nur mit einer sehr hohen Ungenauigkeit prognostizierbar. Der Grund hierfür liegt darin, dass die Schwankungen sowohl bedingt sind durch eine sich zeitlich verändernde Auslastung einer Funkzelle sowie durch eine sich entlang einer Bewegungsrichtung verändernde Verbindungsqualität und/oder Mobilfunknetzabdeckung. Um dennoch eine geeignete Zielrate für mobile Anwendungen ermitteln zu können, werden bislang Datenübertragungsraten nebenläufig zu einer Datenübertragung von einem Kommunikationsteilnehmer gemessen. Auf Basis eines Ergebnisses dieser Messung wird die Zielrate angepasst. Aufgrund einer Bewegung des Kommunikationsteilnehmers weicht die durchgeführte Messung der Datenübertragungsrate in einem nächsten Moment jedoch möglicherweise stark von einer tatsächlich verfügbaren Datenübertragungsrate ab. Infolge dessen ist die Zielrate entweder zu gering, was zu einem unvollständigen Ausnutzen der maximal verfügbaren Datenübertragungsrate führt, oder die Zielrate wird zu hoch angesetzt, wodurch das vorbestimmte Anforderungsprofil nicht erfüllt werden kann, da die erwartete zur Verfügung stehende Datenübertragungsrate nicht vorliegt. Daher werden Zielraten vornehmlich klein gehalten, um eine sichere und zuverlässige Datenübertragung bereitstellen zu können. Dies führt jedoch dazu, dass eine zur Verfügung stehende Datenübertragungsrate nicht ausgeschöpft werden kann.

Aufgabe der Erfindung ist es, eine zur Verfügung stehende Datenübertragungsrate zuverlässig zu prognostizieren.

Diese Aufgabe wird gelöst durch ein Verfahren mit den Merkmalen des Anspruchs 1. Des Weiteren wird diese Aufgabe gelöst durch ein Fahrzeug mit den Merkmalen des nebengeordneten Fahrzeuganspruchs.

Des Weiteren liegt der Erfindung die Aufgabe zugrunde, ein Computerprogramm sowie ein computerlesbares Medium anzugeben.

Diese Aufgaben werden gelöst durch ein Computerprogramm mit den Merkmalen des nebengeordneten Computerprogrammanspruchs sowie durch ein computerlesbares Medium mit den Merkmalen des nebengeordneten Anspruchs 15.

Vorteilhafte Weiterbildungen der Erfindung sind jeweils Gegenstand abhängiger Unteransprüche.

Bei dem erfindungsgemäßen Verfahren zur Prognose eines Steuerparameters betreffend eine Warteschlangenverwaltung wird eine zur Verfügung stehende Datenübertragungsrate gemessen. Des Weiteren wird ein mit der gemessenen Datenübertragungsrate verknüpfter Ort bestimmt. Der Steuerparameter wird auf Basis der gemessenen Datenübertragungsrate und des mit dieser gemessenen Datenübertragungsrate verknüpften Orts ermittelt.

Unter der Warteschlangenverwaltung soll im vorliegenden Zusammenhang eine Warteschlagenverwaltung im Sinne der Informatik verstanden werden. Mittels einer Warteschlangenverwaltung werden Daten zum Zwecke einer Übertragung zwischengespeichert und gemäß vorbestimmten Kriterien sortiert. Auf diese Weise kann eine Reihenfolge von zu übertragenden Daten gemäß vorbestimmten Aspekten festgelegt werden. Vorzugsweise betrifft die Warteschlangenverwaltung eine Verkehrsformung, welche in Fachkreisen auch als Traffic-Shaping bezeichnet wird. Mittels Traffic-Shaping wird üblicherweise eine Datenübertragung von ausgewählten Datenpaketen nach vorbestimmten Kriterien verzögert oder verworfen. Dadurch kann eine Datenübertragung realisiert werden, welche einem vorbestimmten Anforderungsprofil genügt.

Bevorzugterweise wird eine zur Verfügung stehende Datenübertragungsrate wiederholt, insbesondere in regelmäßigen zeitlichen Abständen, gemessen.

Das erfindungsgemäße Verfahren ermöglicht es, eine Warteschlangenverwaltung ortsabhängig zu steuern. Dabei kann auf einfache Weise auf bereits an einem vorbestimmten Ort gemessene Werte betreffend eine Datenübertragungsrate zurückgegriffen werden. Vor einem Erreichen eines betrachteten Orts kann dadurch eine erste Prognose einer zu erwartenden zur Verfügung stehenden Datenübertragungsrate bereitgestellt werden. Für vorbestimmte Orte können daher zum Zwecke einer Steuerung der Warteschlangenverwaltung bereits bekannte Messwerte herangezogen werden. Ein Zeitversatz zwischen einer gemessenen zur Verfügung stehenden Datenübertragungsrate und einer Anwendung eines auf Basis dieser Messung ermittelten Steuerparameters kann dadurch vermieden werden. Ferner kann auf diese Weise ein Steuerparameter bereitgestellt werden, welcher mit lediglich geringer Abweichung zu einer tatsächlich zur Verfügung stehenden Datenübertragungsgeschwindigkeit zum Zwecke der Steuerung der Warteschlangenverwaltung herangezogen wird. Im einzelnen Anwendungsfall kann dadurch eine Zielrate eines Traffic-Schreibers zuverlässig vorhergesagt und angepasst werden. Damit kann eine Steuerung der Warteschlangenverwaltung optimiert werden.

Eine vorteilhafte Weiterbildung sieht vor, dass mittels mehrerer Funkmodule jeweils eine zur Verfügung stehende Datenübertragungsrate gemessen wird. Für jede der gemessenen Datenübertragungsraten wird ein mit dieser gemessenen Datenübertragungsrate verknüpfter Ort bestimmt. Das Funkmodul soll im vorliegenden Zusammenhang im Sinne der Elektrotechnik verstanden werden. Hiernach ist ein Funkmodul eine Baugruppe, welche einen Funkempfänger und/oder einen Funksender aufweist. Zweckmäßigerweise weist das Funkmodul eine Steuerungsvorrichtung auf, mittels welcher das Funkmodul betreibbar ist. Vorteilhaft ist das Funkmodul dazu eingerichtet, Daten mittels eines Mobilfunknetzes zu übertragen. Des Weiteren ist das Funkmodul bevorzugterweise dazu eingerichtet, eine zur Verfügung stehende Datenübertragungsrate zu messen. Mithilfe der mehreren Funkmodule können ortsaufgelöst Daten zum Zwecke der Steuerung der Warteschlangenverwaltung bereitgestellt werden. Dies ermöglicht es, Veränderungen einer an einem vorbestimmten Ort zur Verfügung stehenden Datenübertragungsrate rasch zu erkennen. Dadurch kann eine Qualität der Steuerung der Warteschlagenverwaltung verbessert werden.

Eine vorteilhafte Ausführungsvariante sieht vor, dass der Steuerparameter auf Basis wenigstens eines Teils der mittels der mehreren Funkmodule jeweils gemessenen Datenübertragungsraten sowie der mit diesen gemessenen Datenübertragungsraten jeweils verknüpften Ort ermittelt wird. Dies ermöglicht es, eine effiziente sowie zuverlässige Warteschlangenverwaltung durchzuführen. Räumliche Variationen einer zur Verfügung stehenden Datenübertragungsrate können dadurch schnell erkannt und bei der Steuerung der Warteschlangenverwaltung berücksichtigt werden.

Eine weitere vorteilhafte Ausführungsvariante sieht vor, dass eine Warteschlangenverwaltung eines ersten Funkmoduls der mehreren Funkmodule mittels eines Steuerparameters gesteuert wird, welcher auf Basis eines mittels wenigstens eines weiteren Funkmoduls der mehreren Funkmodule gemessenen Datenübertragungsrate sowie eines mit dieser gemessenen Datenübertragungsrate verknüpften Orts ermittelt wird. Dadurch können von zeitlich und räumlich vorauseilenden Funkmodulen gemessene Informationen genutzt werden. Eine erhebliche Veränderung der so gemessenen Informationen bis zu einem Eintreffen des weiteren Funkmoduls an diesem Ort, ist mit einer nur sehr geringen Wahrscheinlichkeit zu erwarten. Auf diese Weise kann eine Abweichung des Steuerparameters von einer tatsächlich verfügbaren Datenübertragungsrate minimiert werden. Dies ermöglicht es, eine betriebssichere und zuverlässige Datenübertragung zu realisieren. Zudem kann eine an einem vorbestimmten Ort zur Verfügung stehende Datenübertragungsrate weitestgehend ausgeschöpft werden.

Des Weiteren sieht eine vorteilhafte Ausführungsvariante vor, dass die mehreren Funkmodule als Funkmodule eines Fahrzeugs vorgesehen werden. Insbesondere werden die mehreren Funkmodule als Funkmodule eines schienengebundenen Fahrzeugs vorgesehen. Dadurch kann eine zuverlässige und mit geringen Ungenauigkeiten behaftete Prognose des Steuerparameters für schnellfahrende Kommunikationsteilnehmer bereitgestellt werden. Auf Basis dieser Prognose kann sodann die Warteschlangenverwaltung besonders effizient und zuverlässig gesteuert werden. Eine solche Steuerung der Warteschlangenverwaltung kann bereits zu einem Zeitpunkt eine Anpassung vorsehen, bevor mittels des betroffenen Funkmoduls eine Veränderung in der zur Verfügung stehenden Datenübertragungsgeschwindigkeit auftritt.

Eine vorteilhafte Ausführungsform sieht vor, dass eine Bewegung des ersten Funkmoduls einer Bewegung des wenigstens einen weiteren Funkmoduls folgt. Dadurch können räumliche Variationen einer zur Verfügung stehenden Datenübertragungsrate entlang einer Fahrstrecke des Fahrzeugs rasch durch vorauseilende Funkmodule ermittelt werden. Diese Informationen können nachfolgenden Funkmodulen zur Steuerung einer jeweiligen Warteschlangenverwaltung bereitgestellt werden. Ein Einfluss zeitlicher Variationen in der zur Verfügung stehenden Datenübertragungsrate können aufgrund eines relativ geringen räumlichen Abstands der mehreren Funkmodule sowie einer Bewegungsgeschwindigkeit des Fahrzeugs in der Praxis nahezu vernachlässigt werden. Mit großen Fehlern behaftete Steuerparameter können dadurch verhindert werden.

In einer vorteilhaften Weiterbildung werden die gemessene Datenübertragungsrate sowie der mit der gemessenen Datenübertragungsrate verknüpfte Ort in einem Datenbanksystem gespeichert. Insbesondere werden die gemessene Datenübertragungsrate sowie der mit der gemessenen Datenübertragungsrate verknüpfte Ort in einem Ringpuffer gespeichert. Ein Datenbanksystem ermöglicht eine zuverlässige und strukturierte Speicherung der gemessenen und bestimmten Daten. Ferner können diese Daten mittels des Datenbanksystems einer Vielzahl an Interessenten bereitgestellt werden. Beispielhaft kann auf diese Weise eine zentrale Speicherung der Daten auf einem stationären Server erfolgen. Im einzelnen Anwendungsfall kann mittels des Ringpuffers eine zur Verfügung stehende Speicherkapazität beschränkt werden. Der Ringpuffer ist dabei im Sinne der Informatik zu verstehen, wonach der Ringpuffer ein Verfahren betrifft, bei welchem Daten kontinuierlich in einen Speicher mit vorbestimmter Größe gespeichert werden. Sobald der Speicher mittels der gespeicherten Daten belegt ist, werden die ältesten Inhalte mit neuen Inhalten überschrieben.

Eine vorteilhafte Ausführungsvariante sieht vor, dass mittels des Datenbanksystems mehreren Funkmodulen die gespeicherten Daten betreffend eine zur Verfügung stehende und mit einem Ort verknüpfte Datenübertragungsrate zum Zwecke einer Ermittlung des Steuerparameters zur Verfügung gestellt wird. Auf Basis von in einem Datenbanksystem gespeicherten Informationen kann so rasch eine Steuerung der Warteschlangenverwaltung für jedes Funkmodul individuell durchgeführt werden.

Eine weitere vorteilhafte Ausführungsvariante sieht vor, dass mittels des Datenbanksystems Funkmodulen verschiedener Fahrzeuge die gespeicherten Daten betreffend eine zur Verfügung stehende und mit einem Ort verknüpfte Datenübertragungsrate zum Zwecke einer Ermittlung des Steuerparameters zur Verfügung gestellt wird. Dadurch können zeitlich und räumlich aufgelöste historische Messdaten betreffend eine zur Verfügung stehende Datenübertragungsrate bereitgestellt werden. Mittels Funkmodulen eines ersten Fahrzeugs gemessene Datenübertragungsraten können dadurch von folgenden oder entgegenkommenden Fahrzeugen genutzt werden. Auf Basis solcher historischer Informationen können Plausibilitätsprüfungen aktueller Messungen durchgeführt werden. Des Weiteren können die historischen Informationen neben aktuellen Messungen zum Zwecke der Steuerung der Warteschlangenverwaltung herangezogen werden.

Eine weitere vorteilhafte Weiterbildung sieht vor, dass die gemessene Datenübertragungsrate mit einer Zusatzinformation verknüpft wird, welche eine Umwelt und/oder eine Bewegung eines Funkmoduls betrifft. Bei der eine Umwelt betreffenden Zusatzinformation handelt es sich zweckmäßigerweise um meteorologische Daten, wie beispielsweise eine Außentemperatur, eine Luftfeuchtigkeit, eine Windstärke, eine Windrichtung oder Information betreffend einen Niederschlag. Bei der Zusatzinformation, welche eine Bewegung eines Funkmoduls betrifft, handelt es sich bevorzugterweise um eine Bewegungsrichtung und/oder eine Fahrgeschwindigkeit. Anhand der Zusatzinformation kann eine Genauigkeit der Prognose weiter verbessert werden. Auf einfache Weise können dadurch Muster in Abweichungen und Variationen der maximal zur Verfügung stehenden, gemessenen Datenübertragungsrate ermittelt werden.

Eine vorteilhafte Ausführungsvariante sieht vor, dass die Zusatzinformation zum Zwecke der Ermittlung des Steuerparameters in dem Datenbanksystem gespeichert wird. Weiteren Funkmodulen sowie Funkmodulen anderer Fahrzeuge können dadurch auf einfache Weise die Zusatzinformation bereitgestellt werden. Dies eröffnet die Möglichkeit, Umwelteinflüsse sowie Einflüsse durch einen Fahrbetrieb zu berücksichtigen.

Mittels des erfindungsgemäßen Fahrzeugs ist das erfindungsgemäße Verfahren durchführbar.

Das erfindungsgemäße Fahrzeug weist mehrere Funkmodule auf. Mittels dieser Funkmodule ist das erfindungsgemäße Verfahren durchführbar. Eine bei mobilen Anwendungen auftretende räumliche sowie zeitliche Variation einer zur Verfügung stehenden Datenübertragungsrate kann dadurch zuverlässig prognostiziert werden. Auf Basis einer solchen Prognose kann sodann eine Warteschlangenverwaltung sowie eine damit einhergehende Datenübertragung mittels eines Mobilfunknetzes gesteuert werden. Auf diese Weise kann ein zuverlässiges und stabiles Verfahren einer Datenübertragung mittels der Warteschlangenverwaltung realisiert werden.

Eine vorteilhafte Weiterbildung des Fahrzeugs sieht vor, dass die mehreren Funkmodule in vorbestimmten Abständen entlang einer vorgesehenen Fahrtrichtung des Fahrzeugs hintereinander angeordnet sind. So kann auf einfache Weise ein mit der gemessenen Datenübertragungsrate verknüpfter Ort an einer Stelle eines Funkmoduls auf Basis einer zentral erfassten Position des Fahrzeugs ermittelt werden. Dadurch kann das Verfahren zur Prognose des Steuerparameters weiter vereinfacht werden. Mittels des erfindungsgemäßen Computerprogramms ist das erfindungsgemäße Verfahren einfach implementierbar.

Das erfindungsgemäße Computerprogramm veranlasst bei dessen Ausführung eine Datenverarbeitungsvorrichtung dazu, das erfindungsgemäße Verfahren mittels wenigstens eines Funkmoduls der mehreren Funkmodule des erfindungsgemäßen Fahrzeugs durchzuführen.

Bei der genannten Datenverarbeitungsvorrichtung kann es sich beispielsweise um einen Computer, einen Mikrocontroller, einen Prozessor oder eine andere programmierbare Hardwarekomponente handeln. Dabei ist die Datenverarbeitungsvorrichtung zweckmäßigerweise dazu eingerichtet, Daten einzulesen, zu empfangen, zu schreiben, zu übertragen und/oder zu verwalten. Bevorzugt weist das Fahrzeug mehrere Datenverarbeitungsvorrichtungen auf, welche gemeinsam dazu eingerichtet sind, das erfindungsgemäße Verfahren durchzuführen. So kann das erfindungsgemäße Verfahren dezentral durchgeführt werden. Insbesondere kann das Verfahren auf Basis des sogenannten Edge Computing durchgeführt werden. Dadurch können freie Rechenkapazitäten verschiedener in dem Fahrzeug vorgesehener Datenverarbeitungsvorrichtungen zur Durchführung des Verfahrens genutzt werden. Edge Computing ist dabei im Sinne der Informationstechnologie zu verstehen.

Ferner sieht die Erfindung ein computerlesbares Medium vor. Dieses weist Instruktionen auf, welche eine Datenverarbeitungsvorrichtung dazu veranlasst, dass erfindungsgemäßen Verfahren mittels wenigstens eines Funkmoduls der mehreren Funkmodule des erfindungsgemäßen Fahrzeugs durchzuführen. Bei der genannten Datenverarbeitungsvorrichtung handelt es sich insbesondere um die zuvor im Zusammenhang mit dem Computerprogramm beschriebene Datenverarbeitungsvorrichtung.

Bei dem computerlesbaren Medium handelt es sich beispielsweise um eine CD-ROM, eine DVD, einen USB- oder Flash-Speicher oder um ein nicht körperliches Medium, wie ein Datenstrom und/oder ein digitales Trägersignal.

Die voranstehend beschriebenen Eigenschaften, Merkmale und Vorteile der Erfindung sowie die Art und Weise, wie diese erreicht werden, werden im Zusammenhang mit den Figuren in der folgenden Beschreibung des Ausführungsbeispiels der Erfindung und dessen Variationen näher erläutert. Soweit zweckdienlich, werden in den Figuren dieselben Bezugszeichen für dieselben oder einander entsprechende Elemente der Erfindung verwendet. Das Ausführungsbeispiel dient der Erläuterung der Erfindung und beschränkt die Erfindung nicht auf die darin angegebenen Kombinationen von Merkmalen, auch nicht in Bezug auf funktionale Merkmale. Zudem können alle in dem Ausführungsbeispiel und dessen Variationen angegebenen Merkmale isoliert betrachtet und in geeigneter Weise mit den Merkmalen eines beliebigen Anspruchs kombiniert werden.

Es zeigen:
- FIG 1: zeigt zwei Ausführungsbeispiele eines erfindungsgemäßen Fahrzeugs;
- FIG 2: eine Illustration eines Beispiels des erfindungsgemäßen Verfahrens anhand der im Zusammenhang mit FIG 1 beschriebenen Fahrzeuge.

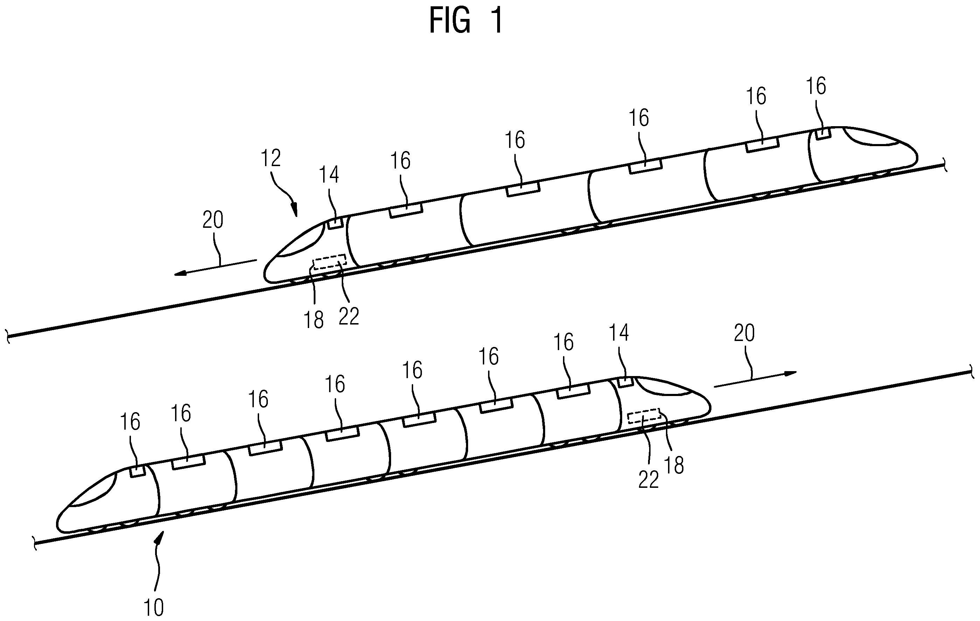

FIG 1 zeigt eine schematische Darstellung zweier schienengebundener Fahrzeuge 10, 12.

Jedes dieser schienengebundenen Fahrzeuge 10, 12 weist mehrere Funkmodule 14, 16 auf. Die mehreren Funkmodule 14, 16 sind in vorbestimmten Abständen entlang einer vorgesehenen Fahrtrichtung 20 des jeweiligen Fahrzeugs 10, 12 voneinander beabstandet angeordnet. Im vorliegend beschriebenen Ausführungsbeispiel sind die mehreren Funkmodule 14, 16 beispielhaft jeweils als ein Mobilfunkmodem ausgeführt. Jedes der Mobilfunkmodems ist vorliegend dazu eingerichtet, eine paketvermittelte Datenübertragung zu realisieren sowie eine maximal zur Verfügung stehende Datenübertragungsrate zu messen.

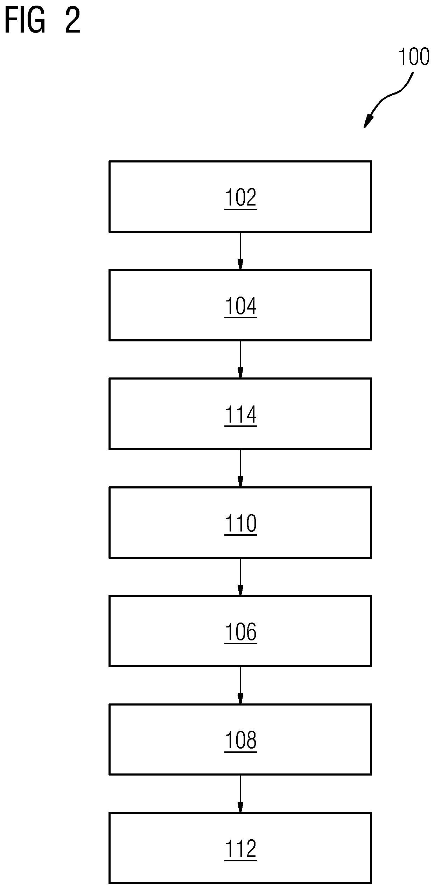

Des Weiteren weist jedes der beispielhaft gezeigten schienengebundenen Fahrzeuge 10, 12 ein Datenbanksystem 18 sowie eine Datenverarbeitungsvorrichtung 22 auf. Mittels des Datenbanksystems 18 sowie mittels der Datenverarbeitungsvorrichtung 22 ist das im Folgenden im Zusammenhang mit FIG 2 näher beschriebene Beispiel des Verfahrens 100 durchführbar.

FIG 2 illustriert ein Beispiel eines Verfahrens 100 zur Prognose eines Steuerparameters zum Zwecke einer Steuerung einer Warteschlangenverwaltung in einer schematischen Darstellung. Die Warteschlangenverwaltung wird vorliegend beispielhaft mittels Traffic-Shaping realisiert. Als Steuerparameter wird daher beispielhaft eine Zielrate ermittelt. Dabei wird vorliegend für jedes der Funkmodule 14, 16 individuell die Zielrate auf Basis einer maximal zur Verfügung stehenden Datenübertragungsrate ermittelt 106. Dadurch kann eine effiziente Warteschlangenverwaltung bereitgestellt werden, welche eine stabile und zuverlässige Datenübertragung unter Beachtung der tatsächlich an einem vorbestimmten Ort zur Verfügung stehenden Datenübertragungsrate ermöglicht.

Im Folgenden wird das Beispiel des Verfahrens 100 der Übersichtlichkeit halber zunächst anhand eines ersten schienengebundenen Fahrzeugs 10 der zwei beispielhaft in FIG 1 gezeigten schienengebundenen Fahrzeuge 10, 12 sowie dessen mehreren Funkmodule 14, 16 erläutert. Vorliegend ist vorgesehen, dass die zwei schienengebundenen Fahrzeuge 10, 12 baugleich ausgebildet sind. Daher kann die folgende Beschreibung entsprechend auf das weitere schienengebundene Fahrzeug 12 der zwei schienengebundenen Fahrzeuge 10, 12 übertragen werden.

Zum Zwecke einer Erstellung einer Prognose betreffend die Zielrate sieht das Beispiel des Verfahrens 100 vor, eine zur Verfügung stehende Datenübertragungsrate zu messen 102. Vorliegend geschieht dies beispielhaft mittels der mehreren Funkmodule 14, 16 des schienengebundenen Fahrzeugs 10. Ferner sieht das Beispiel des Verfahrens 100 vor, dass ein mit der gemessenen 102 Datenübertragungsrate verknüpfter Ort bestimmt wird 104. Hierzu wird beispielhaft zentral eine Position des Fahrzeugs 10 mittels der Datenverarbeitungsvorrichtung 22 bestimmt 104. Relativ zu dieser zentral bestimmten 104 Position ist aufgrund der vorbestimmten Anordnung der mehreren Funkmodule 14, 16 an dem schienengebundenen Fahrzeug 10 jeweils eine Position eines jeden der mehreren Funkmodule 14, 16 relativ zu dem zentralen Referenzpunkt bekannt. Auf diese Weise kann auf Basis der zentralen Positionsbestimmung für jedes der mehreren Funkmodule 14, 16 eine zum Zeitpunkt der Messung vorliegender Ort bestimmt werden 104. Dadurch wird vorliegend jede der mittels eines der mehreren Funkmoduls 14, 16 gemessenen 102 Datenübertragungsrate mit einem Ort der Messung verknüpft.

Ferner sieht das vorliegend beschriebene Beispiel des Verfahrens 100 vor, dass die jeweils mittels der mehreren Funkmodule 14, 16 gemessene 102 Datenübertragungsrate mit einer Zusatzinformation verknüpft wird 114. In einer bevorzugten Ausführungsvariante wird die gemessene 102 Datenübertragungsrate sowohl mit einer Umweltinformation als auch mit einer Information betreffend eine Bewegung des schienengebundenen Fahrzeugs 10 verknüpft 114. Bei der Umweltinformation handelt es sich vorzugsweise um eine Luftfeuchtigkeit und/oder um eine Außentemperatur. Des Weiteren wird die gemessene 102 Datenübertragungsrate mit einer Information betreffend eine Fahrgeschwindigkeit und eine Fahrtrichtung 20 verknüpft 114.

Auf Basis der gemessenen 102 Datenübertragungsrate, des damit verknüpften Orts sowie der damit verknüpften 114 Zusatzinformationen wird die Zielrate zum Zwecke der Steuerung der Warteschlangenverwaltung ermittelt 106. Zu diesem Zweck sieht das vorliegend beschriebene Beispiel des Verfahrens 100 vor, dass mittels eines in Fahrtrichtung 20 betrachtet vorauseilenden Funkmoduls 14 die zur Verfügung stehende Datenübertragungsrate gemessen wird 102. Eine Information betreffend die gemessenen 102 Datenübertragungsrate sowie des mit der gemessenen 102 Datenübertragungsrate verknüpften Orts wird in dem Datenbanksystem 18 des Fahrzeugs 10 gespeichert 110. Daneben werden in dem Datenbanksystem 18 die damit verknüpften 114 Zusatzinformationen der zuvor beschriebenen Art gespeichert 110. Bevorzugterweise ist das Datenbanksystem 18 als ein Ringpuffer ausgeführt. Mittels des Datenbanksystems 18 kann die gemessene 102 Datenübertragungsrate sowie der damit verknüpfte Ort sowie die damit verknüpften 114 Zusatzinformationen den übrigen Funkmodulen 16 der mehreren Funkmodule 14, 16 des Fahrzeugs 10 zur Verfügung gestellt werden 112. Dadurch wird es den übrigen Funkmodulen 16, welche dem vorauseilenden Funkmodul 14 aufgrund deren Anordnung auf dem schienengebundenen Fahrzeug 10 nachfolgen, ermöglicht, die bereits gemessene 102 Datenübertragungsrate als Prognosewert für eine an dem mit der Datenübertragungsrate verknüpften Ort zur Verfügung stehende Datenübertragungsrate heranzuziehen. Noch bevor ein nachfolgendes Funkmodul 16 den betreffenden Ort erreicht, wird mittels dieses Funkmoduls 16 der für die Anwendung an diesem Ort vorgesehene Zielrate auf Basis der mittels des vorauseilenden Funkmoduls 14 gemessenen 102 Datenübertragungsrate ermittelt 106. Damit wird es den nachfolgenden Funkmodulen 16 ermöglicht, deren Warteschlangenverwaltung auf Basis einer Zielrate zu steuern 108, welche anhand der durch das vorauseilende Funkmodul 14 gemessenen 102 Datenübertragungsrate ermittelt wurde 106. Der Übersichtlichkeit halber bezog sich das vorhergehend beschriebene Beispiel auf ein vorauseilendes Funkmodul 14 und mehrere dem einen Funkmodul 14 nachfolgende Funkmodule 16. Bevorzugterweise wird jedoch nebenläufig mit jedem der mehreren Funkmodule 14, 16 in regelmäßigen zeitlichen Abständen die Datenübertragungsrate gemessen 102, der damit verknüpfte Ort bestimmt 104 sowie die vorgesehenen Zusatzinformationen mit der gemessenen 102 Datenübertragungsrate verknüpft 114. Die vorgenannten Daten werden zweckmäßigerweise in dem Datenbanksystem 18 gespeichert und den übrigen Funkmodulen 14, 16 zur Verfügung gestellt 112. So kann jedes Funkmodul der mehreren Funkmodule 14, 16 die durch das oder die dem jeweilig betrachteten Funkmodul der mehreren Funkmodule 14, 16 vorauseilenden Funkmodulen der mehreren Funkmodule 14, 16 zur Verfügung gestellten 112 Daten zum Zwecke eines Ermittelns 106 der Zielrate nutzen.

In einer bevorzugten Ausführungsvariante des Beispiels des Verfahrens 100 ist vorgesehen, dass die in dem Datenbanksystem 18 des schienengebundenen Fahrzeugs 10 gespeicherten 110 Daten Funkmodulen 14, 16 anderer Fahrzeuge zur Verfügung gestellt werden 112. Beispielhaft werden die in dem Datenbanksystem 18 des vorhergehend betrachteten schienengebundenen Fahrzeugs 10 gespeicherten 110 Daten dem weiteren in FIG 1 schematisch dargestellten schienengebundenen Fahrzeug 12 zur Verfügung gestellt 112. Dieses weitere schienengebundene Fahrzeug 12 weist vorliegend eine Fahrtrichtung 20 auf, welche der Fahrtrichtung 20 des vorhergehend betrachteten schienengebundenen Fahrzeugs 10 entgegengerichtet ist. Zweckmäßigerweise ist dabei vorgesehen, dass die mittels der mehreren Funkmodule 14, 16 erfassten und in dem Datenbanksystem 18 des weiteren schienengebundenen Fahrzeugs 12 gespeicherten 110 Daten betreffend eine gemessene 102 Datenübertragungsrate, der damit verknüpfte Ort sowie die vorgesehenen, mit der gemessenen 102 Datenübertragungsrate verknüpfen 114 Zusatzinformationen dem entgegenkommenden schienengebundenen Fahrzeug 10 zur Verfügung gestellt werden 112. Entsprechend ist vorgesehen, dass die in dem Datenbanksystem 18 des schienengebundenen Fahrzeugs 10 gespeicherten 110 Daten betreffend eine gemessene 102 Datenübertragungsrate, der damit verknüpfte Ort sowie die vorgesehenen, mit der gemessenen 102 Datenübertragungsrate verknüpfen 114 Zusatzinformationen dem entgegenkommenden weiteren schienengebundenen Fahrzeug 12 zur Verfügung gestellt werden 112. Dadurch kann eine Steuerung 108 einer Warteschlangenverwaltung für Orte vorbereitet werden, für welche zwar keine eigenen Daten vorliegen, jedoch die eines entgegenkommenden schienengebundenen Fahrzeugs 10, 12. Ebenso ist denkbar, dass es sich um Daten handelt, welche durch Funkmodule eines vorausfahrenden, nicht näher dargestellten schienengebundenen Fahrzeugs erfasst und zur Verfügung gestellt wurden 112. Anhand solcher Daten kann eine Zielrate zur Steuerung 108 der Warteschlangenverwaltung für einen vorbestimmten Ort vor einem Erreichen dieses Orts mit einer hohen Genauigkeit prognostiziert werden.

Obwohl die Erfindung im Detail durch die bevorzugten Ausführungsbeispiele und dessen Variationen näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

## Patentansprüche

1. Verfahren (100) zur Prognose eines Steuerparameters betreffend eine Warteschlangenverwaltung,
bei welchem
- eine zur Verfügung stehende Datenübertragungsrate gemessen wird (102);
- ein mit der gemessenen (102) Datenübertragungsrate verknüpfter Ort bestimmt wird (104);
- der Steuerparameter auf Basis der gemessenen (102) Datenübertragungsrate und des mit dieser gemessenen (102) Datenübertragungsrate verknüpfen Orts ermittelt wird (106).

2. Verfahren (100) nach Anspruch 1,
bei welchem
- mittels mehrerer Funkmodule (14, 16) jeweils eine zur Verfügung stehende Datenübertragungsrate gemessen wird (102);
- für jede der gemessenen (102) Datenübertragungsraten ein mit dieser gemessenen (102) Datenübertragungsrate verknüpfter Ort bestimmt wird (104).

3. Verfahren (100) nach Anspruch 2,
bei welchem der Steuerparameter auf Basis wenigstens eines Teils der mittels der mehreren Funkmodule (14, 16) jeweils gemessenen (102) Datenübertragungsraten sowie der mit diesen gemessenen (102) Datenübertragungsraten jeweils verknüpften Orte ermittelt wird (106).

4. Verfahren (100) nach Anspruch 2 oder 3,
bei welchem eine Warteschlangenverwaltung eines ersten Funkmoduls (16) der mehreren Funkmodule (14, 16) mittels eines Steuerparameters gesteuert wird (108), welcher auf Basis eines mittels wenigstens eines weiteren Funkmoduls (14) der mehreren Funkmodule (14, 16) gemessenen (102) Datenübertragungsrate sowie eines mit dieser gemessenen (102) Datenübertragungsrate verknüpfen Orts ermittelt wird (106).

5. Verfahren (100) nach einem der Ansprüche 2 bis 4,
bei welchem die mehreren Funkmodule (14, 16) als Funkmodule eines Fahrzeugs (10, 12), insbesondere eines schienengebundenen Fahrzeugs, vorgesehen werden.

6. Verfahren (100) nach den Ansprüchen 4 und 5,
bei welchem eine Bewegung des ersten Funkmoduls (16) einer Bewegung des wenigstens einen weiteren Funkmoduls (14) folgt.

7. Verfahren (100) nach einem der vorhergehenden Ansprüche, bei welchem die gemessene (102) Datenübertragungsrate sowie der mit der gemessenen (102) Datenübertragungsrate verknüpfte Ort in einem Datenbanksystem (18), insbesondere einem Ringpuffer, gespeichert werden (110).

8. Verfahren (100) nach Anspruch 7,
bei welchem mittels des Datenbanksystems (18) mehreren Funkmodulen (14, 16) die gespeicherten (110) Daten betreffend eine gemessene (102) und mit einem Ort verknüpfte Datenübertragungsrate zum Zwecke einer Ermittlung (106) des Steuerparameters zur Verfügung gestellt wird (112).

9. Verfahren (100) nach Anspruch 7 oder 8,
bei welchem mittels des Datenbanksystems (18) Funkmodulen (14, 16) verschiedener Fahrzeuge (10, 12) die gespeicherten (110) Daten betreffend eine gemessene (102) und mit einem Ort verknüpfte Datenübertragungsrate zum Zwecke einer Ermittlung des Steuerparameters zur Verfügung gestellt wird (112).

10. Verfahren (100) nach einem der vorhergehenden Ansprüche, bei welchem die gemessene Datenübertragungsrate mit einer Zusatzinformation verknüpft wird (114), welche eine Umwelt und/oder eine Bewegung eines Funkmoduls betrifft.

11. Verfahren (100) nach Anspruch 10,
bei welchem die Zusatzinformation zum Zwecke der Ermittlung (106) des Steuerparameters in dem Datenbanksystem (18) gespeichert wird (110).

12. Fahrzeug (10, 12), insbesondere schienengebundenes Fahrzeug, aufweisend mehrere Funkmodule (14, 16), mittels welchen das Verfahren (100) nach einem der Ansprüche 1 bis 11 durchführbar ist.

13. Fahrzeug (10, 12) nach Anspruch 12,
**dadurch gekennzeichnet, dass**
die mehreren Funkmodule (14, 16) in vorbestimmten Abständen entlang einer vorgesehenen Fahrtrichtung (20) des Fahrzeugs (10, 12) hintereinander angeordnet sind.

14. Computerprogramm, welches bei dessen Ausführung eine Datenverarbeitungsvorrichtung (22) dazu veranlasst, das Verfahren (100) nach einem der Ansprüche 1 bis 11 mittels wenigstens eines Funkmoduls (14, 16) der mehreren Funkmodule (14, 16) des Fahrzeugs (10, 12) nach einem der Ansprüche 12 oder 13 durchzuführen.

15. Computerlesbares Medium, aufweisend Instruktionen, welche eine Datenverarbeitungsvorrichtung (22) dazu veranlasst, das Verfahren (100) nach einem der Ansprüche 1 bis 11 mittels wenigstens eines Funkmoduls (14, 16) der mehreren Funkmodule (14, 16) des Fahrzeugs (10, 12) nach einem der Ansprüche 12 oder 13 durchzuführen.
